(19) **Europäisches Patentamt** / **European Patent Office** / **Office européen des brevets**

(11) **EP 4 054 138 A1**

(12) **EUROPEAN PATENT APPLICATION**

(43) Date of publication:
**07.09.2022 Bulletin 2022/36**

(21) Application number: **21160348.5**

(22) Date of filing: **02.03.2021**

(51) International Patent Classification (IPC):
**H04L 27/26** $^{(2006.01)}$    **H04B 7/12** $^{(2006.01)}$
**H04W 52/34** $^{(2009.01)}$

(52) Cooperative Patent Classification (CPC):
**H04L 27/2602; H04L 27/2634; H04W 52/346;**
H04B 7/12; H04L 27/26132

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Vestel Elektronik Sanayi ve Ticaret A.S.**
  **45030 Manisa (TR)**
• **KOC University**
  **34450 Istanbul (TR)**

(72) Inventors:
• **DOGUKAN, Ali Tugberk**
  **34450 Sariyer (TR)**
• **BASAR, Ertugrul**
  **34450 Sariyer (TR)**
• **ÖZBAKIS, Basak**
  **45030 Manisa (TR)**

(74) Representative: **Grünecker Patent- und Rechtsanwälte PartG mbB Leopoldstraße 4 80802 München (DE)**

(54) **DUPLICATED-MODE DUAL-CARRIER MODULATION WITH COORDINATE INTERLEAVING**

(57) Methods and techniques are described for increasing data rate at a high error performance in wireless transmission. In particular, each complex symbol of a sequence of complex symbols is mapped onto a respective subcarrier in a frequency division based system, which may be orthogonal or non-orthogonal frequency division multiplex. The sequence is a sequence concatenated from N sequences of complex symbols, wherein N is an integer greater than one, and each of the N sequences is a mapping of the data block onto the complex symbols of the respective sequence. The real parts of the sequence have been circularly shifted by a first number, $c_{Re}$, of elements, and/or the imaginary parts of the sequence have been circularly shifted by a second number, $c_{Im}$, of elements, wherein $c_{Re}$ and $c_{Im}$ are different integers greater than or equal to zero.

FIG. 5

Processed by Luminess, 75001 PARIS (FR)

**EP 4 054 138 A1**

**Description**

The present disclosure relates generally to communication, and, in some particular embodiments, to techniques for transmission of signals using dual-carrier modulation.

BACKGROUND

Wireless communication has been advancing over several decades now. Global communication systems as well as local network systems have been recently using technology based on Orthogonal Frequency Division Multiplexing (OFDM).

In OFDM, data symbols are simultaneously transmitted over a plurality of subcarriers. Data symbol here refers to a modulation symbol which may carry one or more data bits, depending on a modulation order. Simultaneously means within one OFDM symbol. An OFDM symbol is obtained by mapping the modulation symbols onto subcarriers of the transmission band and by then transforming the subcarriers by an inverse Fourier transformation (IFFT), or in general by an inverse orthogonal transformation. The OFDM symbol - now in time domain - is then provided for transmission. Before the transmission, still further operations may be used, such as operations in connection with multiple input multiple output (MIMO) processing or some further signal processing. The transmission may further include one or more of pulse shaping, amplification, and modulation onto the appropriate carrier frequency.

A total $N \log_2 M$ number of bits can be transmitted for each OFDM symbol, where N and M are the number of subcarriers in a resource unit (RU) and the modulation order, respectively. Resource unit is a unit of allocable resources. For example, a minimum allocable resource unit may include a plurality of subcarriers in one or more OFDM symbols (corresponding to intervals in time domain). Here, the spectral efficiency of an OFDM system can be given as $\log_2 M$. In IEEE (Institute of electrical and electronics engineers) 802.11 (Wi-Fi) standards, for example in IEEE 802.11ax (Wi-Fi 6), different modulation and coding schemes (MCSs) are defined with varying modulation order and coding rate. For example, MCS0 is a scheme with binary phase shift keying (BPSK) (M=2) and ½ coding rate. In MCS0, only $\log_2 M = 1$ bit can be transmitted per subcarrier. Hence, this scheme may be used when the channel conditions are bad or the received signal strength is low. Dual carrier modulation (DCM), which modulates the same incoming bits over a pair of subcarriers with a same or different constellation, has been introduced to further improve the reliability. However, one of the major drawbacks of DCM is that it reduces the data rate by half.

Improving efficiency of methods like DCM is a challenging task.

SUMMARY

Methods and techniques are described for enabling increasing of data rate and error performance by using a particular dual-carrier modulation.

The invention is defined by the independent claims. Some exemplary implementations are provided by the dependent claims.

For example, a method is provided for wireless transmission, the method comprising the steps of: mapping each complex symbol of a sequence of complex symbols onto a respective subcarrier, wherein the sequence is a sequence concatenated from N sequences of complex symbols, N is an integer greater than one, and each of the N sequences is a mapping of the data block onto the complex symbols of the respective sequence; and (ii) the real parts of the sequence have been circularly shifted by a first number, $c_{Re}$, of elements, and/or (i) the imaginary parts of the sequence have been circularly shifted by a second number, $c_{Im}$, of elements; wherein $c_{Re}$ and $c_{Im}$ are different integers greater than or equal to zero.

Furthermore, a method is provided for wireless reception of a data block, the method comprising the steps of: determining the data block from a sequence of complex symbols, wherein each complex symbol of the sequence has been received on a respective subcarrier, the sequence is a sequence concatenated from N sequences of complex symbols, wherein N is an integer greater than one, and each of the N sequences is a mapping of the data block onto the complex symbols of the respective sequence; and (i) the real parts of the sequence have been circularly shifted by a first number, $c_{Re}$, of elements, and/or (ii) the imaginary parts of the sequence have been circularly shifted by a second number, $c_{Im}$, of elements, wherein $c_{Re}$ and $c_{Im}$ are different integers greater than or equal to zero.

According to further embodiments, apparatuses are provided for transmission and reception if the signals which include processing circuitry configured to perform the steps of the respective transmitting and receiving methods mentioned above, as well as a transceiver configured to receive or transmit the signals.

The above mentioned circuitry may be any circuitry such as processing circuitry including one or more processors and/or other circuitry elements.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

BRIEF DESCRIPTION OF DRAWINGS

An understanding of the nature and advantages of various embodiments may be realized by reference to the following figures.

FIG. 1    is a block diagram illustrating an exemplary communication system;

FIG. 2    is a schematic drawing illustrating the mapping on Resource Units according to DCM;

FIG. 3a    is a block diagram illustrating an exemplary transmitting device employing the duplicated-mode dual-carrier modulation with coordinate interleaving;

FIG. 3b    is a block diagram illustrating an exemplary receiving device employing the duplicated-mode dual-carrier modulation with coordinate interleaving;

FIG. 4    is a schematic drawing illustrating the mapping of data symbols onto Resource Units according to a DCM;

FIG. 5    is a schematic drawing illustrating the mapping of data symbols onto Resource Units according to a DCM/DUP with coordinate interleaving;

FIG. 6    is a schematic drawing illustrating the mapping of data symbols onto Resource Units using power levels for carrying additional data;

FIG. 7    is a schematic drawing illustrating BPSK and a rotated BPSK constellations;

FIG. 8    is a block diagram illustrating an exemplary transmitter applying power pattern index modulation.

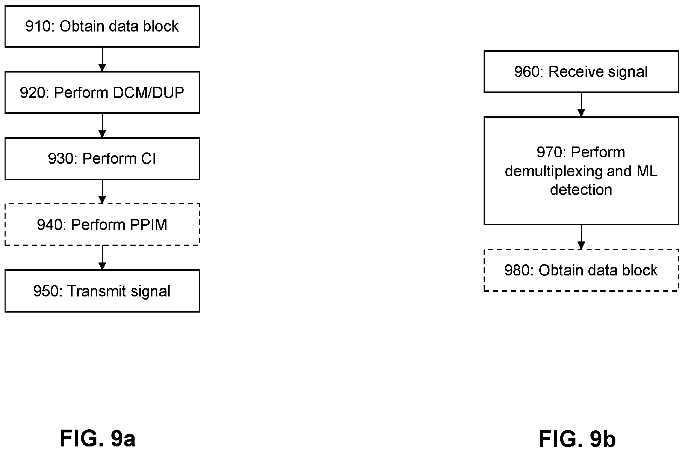

FIG. 9a    is a flow diagram illustrating exemplary steps performed by a transmitting device employing the duplicated-mode dual-carrier demodulation with coordinate interleaving;

FIG. 9b    is a flow diagram illustrating exemplary steps performed by a receiving device employing the duplicated-mode dual-carrier demodulation with coordinate interleaving; and

FIG. 10a    is a block diagram showing an exemplary transmission chain employing OFDM and suitable for an exemplary implementation of some embodiments.

FIG. 10b    is a block diagram showing an exemplary reception chain employing OFDM and suitable for an exemplary implementation of some embodiments.

Like reference numbers and symbols in the various figures indicate like elements, in accordance with certain example implementations.

DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be openended terms. Further, the phrase "based on" is intended to mean "based at least partially on" unless explicitly stated otherwise.

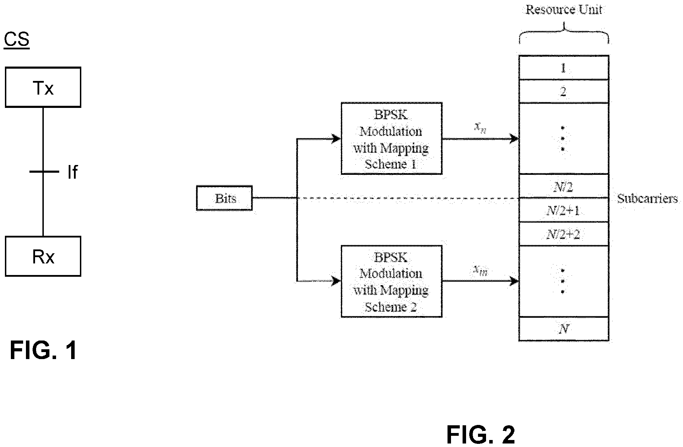

Fig. 1 illustrates an exemplary communication system CS in which Tx represents a transmitter and Rx represents a receiver. The transmitter Tx is capable of transmitting a signal to the receiver Rx over an interface If. The interface may be, for instance, a wireless interface. The interface may be specified by means of resources, which can be used for the transmission and reception by the transmitter Tx and the receiver Rx. Such resources may be defined in one or more (or all) of the time domain, frequency domain, code domain, and space domain. It is noted that in general, the "transmitter" and "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface If implementation. However, it may be applied readily to some existing communication systems as well as to the extensions of such systems, or to new communication systems. Exemplary existing communication systems may be, for instance the 5G New Radio (NR) in its current or future releases, and/or the IEEE 802.11 based systems such as the recently studied IEEE 802.11be or the like.

As mentioned in the background section, OFDM is a currently rather popular wideband multicarrier transmission technology and has been used in many standards such as IEEE 802.11 (Wi-Fi), LTE (Long Term Evolution, which is a mobile communication system of 4th generation, 4G), New Radio (NR, which belongs to $5^{th}$ generation, 5G). In OFDM, frequency band is divided into subbands and these bands are called subcarriers. The data symbols, which are obtained by mapping incoming bits with a constellation, are transmitted simultaneously over these subcarriers. A certain number of subcarriers forms a resource unit (RU). For example, an RU may include 26, 52, 106, 242, 484 or 996 subcarriers. In Wi-Fi standards such as IEEE 802.11ax (Wi-Fi 6), there are several MCSs which allow to adjust the data rate and communication range. For example, MCS0 corresponds to BPSK with ½ coding rate and it provides the most reliable communication and the lowest data rate among all MCSs. To further extend the communication range and to improve the error performance in Wi-Fi, DCM has been introduced in the expense of reducing the data rate by half. It is noted that the present disclosure can readily be applied to OFDM systems, but is not limited thereto. It is conceivable that the present disclosure may be applied in general to other schemes such as frequency division multiplexing (FDM). The OFDM or the FDM is not limited to using FFT, but may use discrete Fourier transformation (DFT) or other transformations. At the receiver side, the time domain signal is received. Samples belonging to an OFDM symbol are transformed by a (forward) transformation such as fast Fourier transformation or the like. Thereby, modulation symbols mapped onto the subcarriers are obtained and de-mapped.

*Dual-Carrier Modulation (DCM)*

DCM is a modulation scheme which may be applied to OFDM based transmission methods. DCM has been involved in IEEE 802.11ax standard and applied with MCSs 0, 1, 3, and 4. In DCM, an RU with size N (e.g., N subcarriers) is divided into two parts.

Fig. 2 illustrates an exemplary mapping scheme of DCM-MCS0, i.e. DCM based on BPSK.

As illustrated in Fig. 2, data symbols ($x_n$ and $x_m$) of the first and second half of the RU are determined by the same incoming bits to provide frequency diversity, where $n \in \{1,...,N/2\}$ and $m=N/2+n$ are the subcarrier indices for the first and second half of the RU, respectively. Note that the same or different modulation schemes can be used for mapping the incoming bits onto the data symbols of the first and the second half of the RU. The term modulation here refers to mapping of one or more bits onto a signal point out of a plurality of signal points given by the modulation scheme. Arrangement of the signal points in the modulation scheme is sometimes also referred to as constellation. In case of BPSK, one bit of data is mapped onto one data symbol (modulation symbol). In the BPSK, the two possible signal points are typically antipodal, and represent two respective phases differing from each other by pi (180°).

More specifically, according to DCM-MCS0, N/2 groups of bits are mapped respectively onto the first N/2 subcarriers (e.g., the first N/2 subcarriers, when the subcarriers are ordered according to their index). Furthermore, the same N/2 groups of bits are mapped respectively onto the second N/2 subcarriers (e.g., the last N/2 subcarriers, when the subcarriers are ordered according to their index). In this case, as BPSK mapping is applied, the group size is one, meaning that each of the N/2 groups includes one bit. In other words, N input bits are split into two branches. In the first branch, the N/2 bits are mapped by means of a first BPSK mapping to the data symbols $x_n$, whereas in the second branch, the remaining N/2 bits are mapped by means of a second BPSK mapping to the data symbols $x_m$.

Since DCM transmits the same information over two different subcarriers of OFDM, it provides reliable communication and extends the communication range. However, for the same reason, the conventional DCM method halves the data rate of any MCS, which is very important metric in wireless communication networks.

Data rate is one of important metrics for efficiency in the existing wireless communication networks. However, as the data rate increases in a system, the error performance typically gets worse. As previously mentioned, in Wi-Fi technology such as IEEE 802.11ax, there are several MCSs to adjust the data rate and the reliability. For example, MCS0 is the most reliable scheme; nevertheless, its data rate is low compared to schemes with higher layer modulations. The DCM technique may improve the reliability of MCSs and so it may also increase the communication range. However, it may decrease the data rate. In future wireless communication technologies, which aim to provide very high data rates, such as IEEE 802.11be, it would be desirable to avoid or reduce the decrease in data rate.

*Detailed exemplary embodiments and modifications*

In order to make more spectrum available, draft of the Wi-Fi 7 introduces a new frequency band that is called a low power indoor (LPI) channel and that operates at 6 GHz. A duplicated mode (abbreviated as DUP) is an approach that duplicates a transmitted signal over additional frequency resources. Such an approach has been proposed to extend the range in LPI channel. DUP mode can be used with DCM-MCSs, but, it reduces the data rate of the DCM-MCSs by half.

In order to improve the performance, in some embodiments put forth herein, the DCM and the DUP mode DCM are amalgamated with space-time block codes with coordinate interleaving. A symbol assignment technique, designed with the data field of Wi-Fi technology in mind, is proposed to provide improved error performance. Moreover, in addition or alternatively to the DUP mode DCM, a power pattern index modulation is provided, which is capable of conveying additional bits by the indices of subcarrier power patterns.

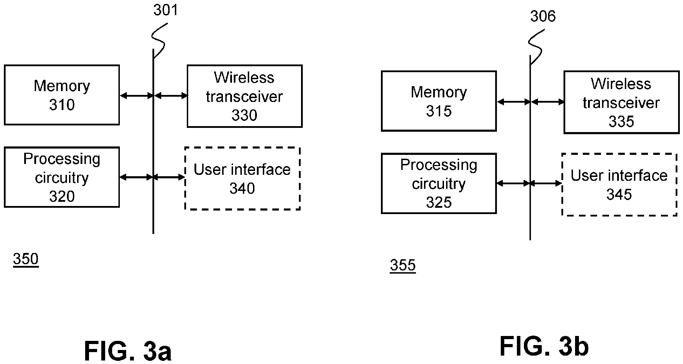

Fig. 3a illustrates a transmitting device 350 according to some exemplary embodiments. The transmitting device 350 may be a part of any wireless communication device such as STA or AP, or, in general base station or terminal. The transmitting device 350 comprises memory 310, processing circuitry 320, and a wireless transceiver 330 (or a wireless transmitter 330), which may be capable of communicating with each other via a bus 301. The transmitting device 350 may further include a user interface 340. However, for some applications, the user interface 340 is not necessary (for instance some devices for machine-to-machine communications or the like).

The memory 310 may store a plurality of firmware or software modules, which implement some embodiments of the present disclosure. The memory may 310 be read from by the processing circuitry 320. Thereby, the processing circuitry may be configured to carry out the firmware/software implementing the embodiments. The processing circuitry 320 may include one or more processors, which, in operation, prepared a data block for transmission. In particular, the circuitry 320 is configured to map each complex symbol of a sequence of complex symbols onto a respective subcarrier. The sequence is a sequence concatenated from N sequences of complex symbols, wherein N is an integer greater than one. Each of the N sequences is a mapping of the data block onto the complex symbols of the respective sequence. Moreover, the real parts of the sequence have been circularly shifted by a first number, $c_{Re}$, of elements. Alternatively or in addition, the imaginary parts of the sequence have been circularly shifted by a second number, $c_{Im}$, of elements. Herein, $c_{Re}$ and $c_{Im}$ are different integers greater than or equal to zero. The data block may be a block of data provided for transmission from a higher layer or it may be an encoded block of data. For instance, the data block may be encoded by a forward error coding of any kind. The wireless transceiver 330, in operation, transmits the transmission signal generated by the mapping and possibly further operations. Such further operations may include an inverse transformation such as the IFFT or IDCT, in accordance with the desired (orthogonal or non-orthogonal) frequency division multiplex. Moreover, the transformed time-domain symbols may then be modulated onto the actual carrier, amplified or the like.

As mentioned above, the program code may cause the processing circuitry (e.g. including one or more processors) to operate as a special purpose computer programmed to perform the techniques disclosed herein. The memory 310 is shown in Fig. 3a to be separated from the processing circuitry. However, this is only an example. In general, the memory 310 may be implemented within the processing circuitry, and e.g., within the one or more processors. The term "memory" refers to any type of long term, short term, volatile, nonvolatile, or other memory and is not to be limited to any particular type of memory or number of memories, or type of media upon which memory is stored.

The wireless transceiver 330 may operate according some known resource multiplexing and/or multi-user multiplexing scheme. In general, any currently used scheme such as those employed in the IEEE 802.11 framework or in the 5G/6G framework are applicable. In particular, possible examples include the OFDM, OFDMA, or non-orthogonal multiple access (NOMA) or the like.

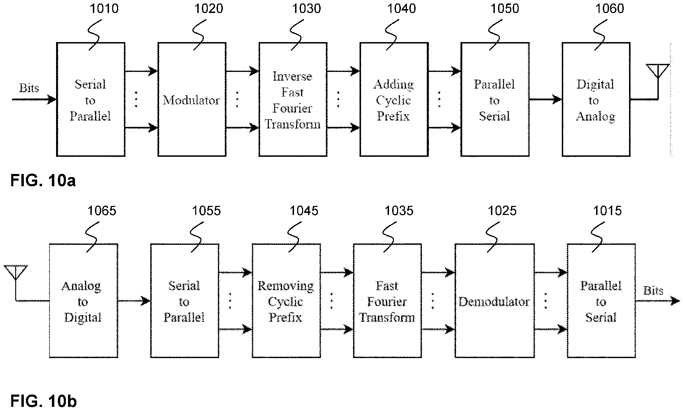

An exemplary transmitter is illustrated in Fig. 10a for OFDM. Accordingly, a data block of bits is obtained for the transmission. The bits may be obtained, for example, from a preceding processing such as forward error coding, rate matching, insertion of a CRC and/or multiplexing data for different users or the like. They are then parallelized in the serial to parallel module 1010 in order to match the size of the inverse transformation to be taken. Modulator 1020 modulates the bits in modulation symbols with a modulation such as BPSK or QPSK, nQAM, or the like and perform, as will be described in the following mapping of the modulation symbols onto the subcarriers to be transformed into one OFDM symbol. Such mapping may correspond to the mapping according to any of the embodiments described in the following. After the modulation 1020, an inverse transformation (here, exemplarily, the inverse fast Fourier transformation, IFFT) 1030 is applied to obtain an OFDM symbol. The OFDM symbol may be added a cyclic prefix (CP) in the CP module 1040. After parallel to serial conversion 1050, the signal is passed to the front end for the transmission. This may include digital to analog conversion 1060 and further amplification or signal shaping steps. It is noted that the transceiver modules 1030-1060 are only exemplary and the present disclosure is not limited thereto. There may be further modules or the present modules may have further functionalities, such as PAPR reduction or the like. As mentioned above, OFDM is also only an exemplary wireless transmission kind. In general, alternative approached such as NOMA or the like are possible.

In some embodiments, the processing circuitry performing the functions described herein may be integrated within an integrated circuit on a single chip. The output of the processing circuitry is the combined signal in time domain. It may be a discrete signal, which the processing circuitry may provide to a transceiver 330 for transmission. The processing circuitry may also implement a control function to control the transceiver 330 to transmit the signal. The transceiver 330 is configured (e.g. by the processing circuitry) to transmit a signal by means of symbols carrying the generated signal. For example, the processing circuitry 320 may configure (control) the transceiver 330, over the bus 301, to transmit the signal. The transceiver may be, for example a wireless transceiver.

The DCM provides the same information over two separated subcarriers in order to increase diversity order. The DUP mode further increases the diversity order by duplicating DCM signal over an additional frequency band. However, DUP mode doubles the frequency resources used by the DCM. Thus, it uses more resources than DCM for the same data rate. With the above mentioned transmitting device, and the corresponding receiving device, it may be possible to increase the diversity order of these schemes without exploiting additional resources and decreasing the data rate. The increase of the diversity order is achieved, in some embodiments, by separating data symbols into real and imaginary parts, and distributing them over multiple subcarriers. The data symbols of DCM or DCM with DUP signals are thus separated into real and imaginary parts. Then, the imaginary parts of the symbols are circularly shifted over subcarriers in such a way that the complexity (e.g. receiver complexity) remains same. Hence, all data symbols are distributed over more frequency resources compared to DCM alone or DCM with DUP. This may lead to increasing the diversity order and so improving the error performance.

In an exemplary embodiment, a DCM is applied during which an RU with $N_{SD}$ data subcarriers is divided into two parts. The data symbols ($x_n$ and $x_m$) of the first and second half of the RU are determined by the same incoming bits to provide frequency diversity, where $n \in \{1, ..., N_{SD}/2\}$ and $m = N_{SD}/2 + n$ are the subcarrier indices for the first and second half of RU, respectively. In general, the same or different mapping schemes can be used for mapping the incoming bits onto data symbols. Finally, the overall data symbols vector can be obtained as $$y_{DCM} = [x_1^T, x_2^T]^T$$ where $x_1 = [x_1, ..., x_{N_{SD}/2}]^T$ and $x_2 = [x_{N_{SD}/2+1}, ..., x_{N_{SD}}]^T$ represent the data symbol vectors for the first half and second half of the RU. The nth entities of $x_1$ and $x_2$ (n being an exemplary index within each of the vectors $x_1$ and $x_2$) convey the same information.

In an LPI channel, DUP mode DCM can be applied to further increase the communication range for single user (SU). Accordingly, the DCM signal is duplicated over frequency domain. The overall data symbols vector can be obtained as $$y_{DUPDCM} = [x_1^T, x_2^T, x_1^T, x_2^T]^T.$$ In other words, in the DUP mode DCM, $N_{SD}$ is the twice that in DCM.

According to the present embodiment, a diversity enhancing technique is provided which improves the performance of DCM and DCM with DUP mode while providing the same data rate. The technique may be referred to as coordinate interleaving (CI) DCM, abbreviated as CI-DCM. Correspondingly, CI-DUP-DCM may be provided, if DCM and DUP mode are applied together alongside with the CI. For example, let us assume that $x = x_1 = x_2$. Then $y = [x^T, x^T]^T$, $y = [x^T, x^T, x^T, x^T]^T$ for DCM and DUP mode DCM, respectively. According to the CI approach, vector $x$, is separated elementwise into real and imaginary parts. Then, the imaginary part ($x^I$) of $x$ is circularly shifted by c elements. An $a^{th}$ element of the new circularly shifted version of the imaginary data symbol vector can be obtained as $\tilde{x}_a^I = x_b^I$, where

$$b = \begin{cases} a + c, & a \leq c \\ (a + c) \bmod (2c), & otherwise \end{cases}$$

and $a = 1, ..., 2c$. To possibly keep the receiver complexity order in the linear level (e.g. with individual symbol decoding as described below), c may be selected as $N_{SD}/2$, $N_{SD}/4$ and, $N_{SD}/8$ for MCS, DCM-MCS, and DUP mode DCM-MCS, respectively. However, the present disclosure is not limited to such selection of c. Moreover, it is noted that the shifting may be shifting left or shifting right.

The vector form of this circularly shifted data symbols is represented as $\widetilde{x}^I = [\tilde{x}_1^I, ..., \tilde{x}_{2c}^I]^T$. Then, the coordinate interleaved data symbol vector is obtained as $\widetilde{x} = x^R + j\widetilde{x}^I, j = \sqrt{-1}$. Finally, the overall transmitted signals can be obtained as $y = [\tilde{x}^T, \tilde{x}^T]^T$ and $y = [\tilde{x}^T, \tilde{x}^T, \tilde{x}^T, \tilde{x}^T]^T$ for DCM and DUP mode DCM, respectively. Further processing on y may be performed before transmission, e.g. for PAPR reduction.

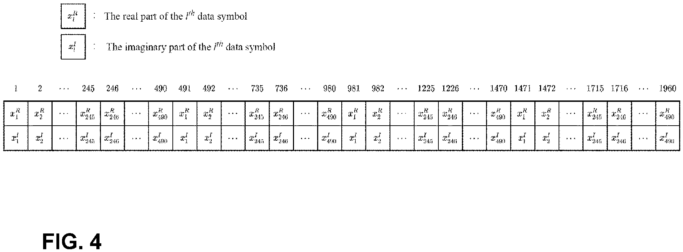

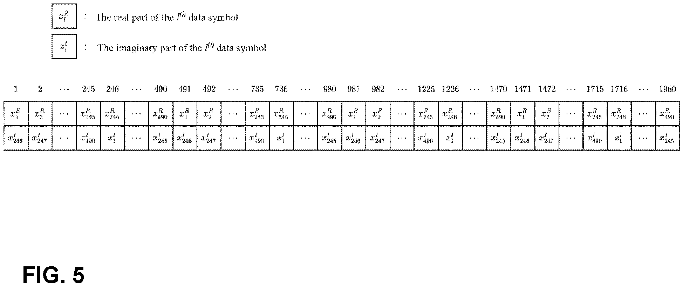

In Figs. 4 and 5, exemplary frame structures of DUP mode DCM and CI-DUP-DCM respectively are given for $x = x_1 = x_2$ and $N_{SD} = 1960$. The numbers above the frame structure represent the data subcarrier indices running from 1 to $N_{SD} = 1960$ in this example. When comparing Fig. 4 with Fig. 5, it can be seen that the frame structure of the CI-DUP-DCM is obtained by circularly shifting the imaginary part of a DUP mode DCM signal by $c = N_{SD}/8 = 245$ elements.

In particular, Fig. 4 shows a DUP mode DCM. The input of such DUP/DCM mapping is complex vector x which has 490 elements $x_l$ with $l=1, 2, ..., 490$. This vector x is mapped four times onto the consecutive subcarriers 1 to 1960. Specifically, according to the DCM, the 490 elements are mapped twice, namely once onto the subcarriers with indexes 1 to 460 an second time onto the subcarriers with indexes 461 to 980. Then, according to DUP mode, the DCM mapping is repeated for subcarrier indices 981 to 1960. For illustration purpose, in Fig. 4 vector x is shown divide into its real and imaginary components. The real components (elements $x_l^R$) are shown in the upper row and the imaginary components (elements $x_l^I$) are shown in the lower row. This representation enables for an easier comparison with the CI-DUP/DCM of Fig. 5.

Fig. 5 shows the CI-DUP/DCM according to an embodiment. As can be seen in the figure, the real part (sequence of real part of vector elements) of the vector x is mapped in the same way as the real part in Fig. 4. However, the imaginary part of the vector x is cyclically shifted before the DUP/DCM mapping. Accordingly, shift left by c=245 results in $\widetilde{x}^I = [\tilde{x}_1^I, ..., \tilde{x}_{2c}^I]^T$ corresponding to vector elements $x_{246}, x_{247},..., x_{490}, x_1, x_2,...,x_{245}$. It is noted that, in general, a same result is achieved, if the cyclical shift is applied to the four time copied (mapped) elements in this example.

In other words, the mapped complex vector ($y = [\tilde{x}^T, \tilde{x}^T]^T$ and $y = [\tilde{x}^T, \tilde{x}^T, \tilde{x}^T, \tilde{x}^T]^T$ for DCM and DUP mode DCM, respectively) may be seen as a sequence of complex symbols. Each complex symbol of the sequence of complex symbols is mapped onto a respective subcarrier and corresponds to the respective complex vector elements. The sequence is a sequence concatenated from N sequences of complex symbols, wherein N is an integer greater than one. Here, N=4, since DCM and well as DUP mode is applied.

Each of the N sequences is a mapping of the data block onto the complex symbols of the respective sequence. It is noted that Fig. 5 illustrates a simple case in which the N sequences are the same. However, the present disclosure is not limited to such an approach. For example, the mappings of the data block may be different, e.g. may be different redundancy versions representing the coded data block or may be scrambled or interleaved (compared to each other) or the like.

Moreover (according to CI), the real parts of the sequence are circularly shifted by a first number, $c_{Re}$, of elements. Alternatively or in addition, the imaginary parts of the sequence have been circularly shifted by a second number, $c_{Im}$, of elements. Herein, $c_{Re}$ and $c_{Im}$ are different integers greater than or equal to zero. In the example of Fig. 5, the real part was not cyclically shifted and the imaginary part was shifted by 245, resulting in $c_{Re} = 0$ and $c_{Im} = 245$). However, in general, the present disclosure is not limited to such an approach. Similar advantages may be achieved by relative shift between the real and imaginary part, so that in some conceivable embodiments, imaginary part is not shifted, but the real part is shifted. Both parts may be shifted, as long as the shift is different for the real and imaginary part.

In Fig. 5, the $l^{th}$ complex data symbol ($x_l$) is transmitted over eight separated subcarriers whereas $x_l$ is transmitted over four separated subcarriers in DUP mode DCM. Hence, the diversity order is improved while providing the same data rate. In the example of Fig. 5, the cyclic shift is the same for all four replicas of the imaginary portion of the data block symbols. However, according to some embodiments, it is possible to vary the cyclic shift amount between the copies (replicas) of the data block symbols. In other words, the DCM and/or DUP may apply a different cyclic shift amount for the first and the second half of symbols.

The mapping of symbols in Figs. 4 and 5 was performed onto consecutive subcarriers. However, in general, this should not be a limitation of the present disclosure. Rather, it may be beneficial, to map the data block symbols into different and not neighboring bands.

As mentioned above the number, N, of the N sequences may be two (for DCM) or four (for DUP/DCM). However, the present disclosure also supports other values of N, such as 3, 5, ..., 8 or more. Figs. 4 and 5 showed a case in which all N sequences are identical ($x = x_1 = x_2$). However, as also mentioned above, in some embodiments, two or more of the N sequences are mutually different ($x_1 \neq x_2$). There may be more than two different sequences (vectors).

In some exemplary implementations, a second half of the complex sequence mapped onto the subcarriers is a repetition of the first half of the sequence. However, in other embodiments, the two halves may be different representations of the same data, in terms of coding and/or modulation. Regarding the coding, different representations may be different redundancy versions or differently scrambled of interleaved versions of data.

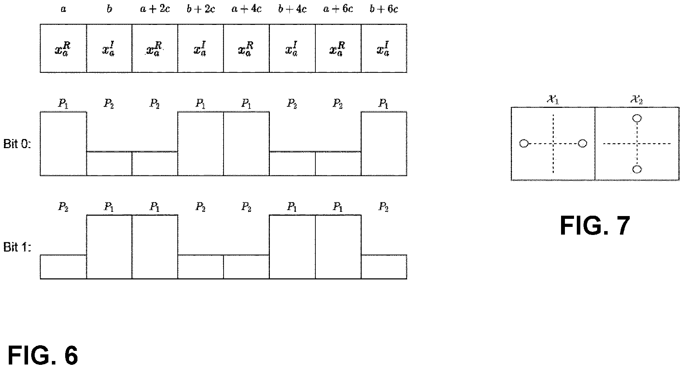

Regarding modulation, in some embodiments, the modulation schemes can be obtained by partitioning of a Phase Shift Keying (PSK) or Quadrature Amplitude Modulation (QAM) scheme into groups of with M symbols, and/or are mutually related by a rotation in the complex plane. For instance, the modulation schemes (or modes) include Binary Phase Shift Keying (BPSK) and a Quadrature Binary Phase Shift Keying (QBPSK). This is illustrated in Fig. 7: two modes for BPSK constellations can be obtained by the original BPSK symbols and its rotated version as $X_1 = \{1,-1\}$ and $X_2 = \{j,-j\}$, respectively (here, j denotes the imaginary unit, i.e., $j^2 = -1$). In other words, the symbols of a first modulation scheme may be the symbols $\{1,-1\}$ of the BPSK, and the symbols of a second modulation may be obtained by rotating the BPSK symbols by $\pi/2$ in the complex plane. The symbols of the first and the second modulation scheme may be obtained by dividing the symbols of a QPSK (or, more generally, of a modulation scheme having 4 symbols) into two groups, each of the two corresponding to one of the first and the second modulation scheme. For example, the first BPSK mapping maps 0 and 1 onto phases 0 and $\pi$, whereas the second BPSK mapping maps 0 and 1 onto phases $\pi/2$ and $3\pi/2$, which correspond to the above mentioned two BPSK constellations. It is noted that the QPSK, and the corresponding two BPSK mappings may be rotated by the same constant angle, e.g. $\pi/4$. Then, the first BPSK mapping maps 0 and 1 onto phases $\pi/2$ and $5\pi/2$, whereas the second BPSK mapping maps 0 and 1 onto phases $3\pi/2$ and $7\pi/2$. These have been examples for how two obtain two modulation schemes (Q=2), each having two symbols (M=2).

In general (i.e., for $Q \geq 2$ and $M \geq 2$), Q modulation schemes may be obtained by partitioning constellations with at least "Q times M" symbols. For instance, the symbols of 16-QAM may be divided into four groups each having 4 symbols, 8 groups each having 2 symbols, or 2 groups each having 8 symbols. This is not limited to 16-QAM. For instance, the symbols of any QAM (4-QAM, 8-QAM, 16-QAM, 32-QAM, 64-QAM, 256-QAM, etc) or PSK modulation (4-PSK, 8-PSK, 16-PSK,...) may be partitioned. Alternatively, new modulation schemes may be obtained from a given modulation scheme by rotating the constellation (e.g., by rotating each symbol) in the complex plane. The given modulation and the rotated modulation schemes will have the same number of symbols.

According to an embodiment, an absolute value of a difference between the first and the second number is

$$|c_{\mathrm{Re}} - c_{\mathrm{Im}}| = \frac{N_{SD}}{2N},$$

wherein $N_{SD}$ is a number of the subcarriers. Such selection of cyclic shift(s) may lead to a lower complexity. As also in Fig. 5, either $c_{\mathrm{Re}}$ or $c_{\mathrm{Im}}$ may be equal to zero.

Fig. 3b illustrates a receiving device 355 according to some exemplary embodiments. The receiving device 355 comprises memory 315, processing circuitry 325, and a wireless transceiver 335 (or a wireless receiver 330), which may be capable of communicating with each other via a bus 306. The receiving device 355 may further include a user interface 345. However, for some applications, the user interface 345 is not necessary (for instance some devices for machine-to-machine communications or the like).

In some embodiments, the processing circuitry 325 performing the functions described herein may be integrated within an integrated circuit on a single chip. The processing circuitry may also implement a control function to control the transceiver 335 to receive the signal. The transceiver 330 is configured (e.g. by the processing circuitry) to receive a signal and obtain symbols carried therein. For example, the processing circuitry 320 may configure (control) the transceiver 330, over the bus 301, to receive the signal. The transceiver may be, for example a wireless transceiver obeying some standard or some pre-defined rules in order to comply with the transmitter, e.g. the one described with reference to Fig. 3a.

The transceiver/receiver 335, in operation, receives a transmission signal. The processing circuitry 325 may include one or more processors, which, is/are configured to determine the data block from a sequence of complex symbols. Moreover, and correspondingly to the above described transmitter, each complex symbol of the sequence has been received on a respective subcarrier. The sequence is a sequence concatenated from N sequences of complex symbols, wherein N is an integer greater than one. Each of the N sequences is a mapping of the data block onto the complex symbols of the respective sequence. The real parts of the sequence have been circularly shifted by a first number, $c_{\mathrm{Re}}$, of elements, and/or the imaginary parts of the sequence have been circularly shifted by a second number, $c_{\mathrm{Im}}$, of elements. Herein, $c_{\mathrm{Re}}$ and $c_{\mathrm{Im}}$ are different integers greater than or equal to zero.

In general, at the receiver, before the above mentioned processing, the signal may be received over one or more antennas of the receiver, amplified, and transformed into frequency domain by a transformation such as FFT or DFT (Discrete Fourier Transformation), corresponding to the inverse transformation which has been applied at the encoder. After performing fast Fourier transform (FFT), the received signal at $a^{th}$ subcarrier is

$$r_a = h_a y_a + w_a = h_a\left(x^R_{k,a} + j\tilde{x}^I_{k,a}\right) + w_a,$$

where $h_a$ is the channel fading coefficient and $w_a$ represents the noise sample in the frequency domain. For DUP mode DCM, the maximum likelihood (ML) detection can be employed to determine the data symbols as:

$$[\hat{s}_l, \hat{s}_{l+c}] = \underset{\mu=1,...,M, \nu=1,...,M}{argmin} \left\| \tilde{r}_l - \tilde{H}_l \tilde{s}_{\mu\nu} \right\|^2,$$

where

$\tilde{r}_l = [r_l, r_{l+c}, r_{l+2c}, r_{l+3c}, r_{l+4c}, r_{l+5c}, r_{l+6c}, r_{l+7c}]^T$,
$H_l = diag([h_l, h_{l+2c}, h_{l+3c}, h_{l+4c}, h_{l+5c}, h_{l+6c}, h_{l+7c}])$,
$l = 1, ..., c, \tilde{s}_{\mu\nu} = [s_{\mu\nu}, s_{\mu\nu}, s_{\mu\nu}, s_{\mu\nu}, s_{\mu\nu}, s_{\mu\nu}, s_{\mu\nu}, s_{\mu\nu}]^T$,

$s_{\mu\nu}$ = Re$\{s_\mu\}$ + $jIm\{s_\nu\}$, $s_\mu$, $s_\nu \in S^\varphi$, and $S^\varphi$ is the rotated constellation by angle $\varphi$ and with size $M$. In ML detection, a total number of $M^2$ metric calculations is performed to decode a pair of symbols. Nevertheless, this number can be reduced by using single-symbol ML decoding property of coordinate-interleaved orthogonal designs (CIODs). The equivalent channel model for the $l^{th}$ data symbol, can be obtained as:

$$
\begin{bmatrix} r^R_l \\ r^I_l \\ r^R_{l+c} \\ r^I_{l+c} \\ r^R_{l+2c} \\ r^I_{l+2c} \\ r^R_{l+3c} \\ r^I_{l+3c} \\ r^R_{l+4c} \\ r^I_{l+4c} \\ r^R_{l+5c} \\ r^I_{l+5c} \\ r^R_{l+6c} \\ r^I_{l+6c} \\ r^R_{l+7c} \\ r^I_{l+7c} \end{bmatrix}
=
\begin{bmatrix}
h^R_l & 0 & 0 & -h^I_l \\
h^I_l & 0 & 0 & h^R_l \\
0 & -h^I_{l+c} & h^R_{l+c} & 0 \\
0 & h^R_{l+c} & h^I_{l+c} & 0 \\
h^R_{l+2c} & 0 & 0 & -h^I_{l+2c} \\
h^I_{l+2c} & 0 & 0 & h^R_{l+2c} \\
0 & -h^I_{l+3c} & h^R_{l+3c} & 0 \\
0 & h^R_{l+3c} & h^I_{l+3c} & 0 \\
h^R_{l+4c} & 0 & 0 & -h^I_{l+4c} \\
h^I_{l+4c} & 0 & 0 & h^R_{l+4c} \\
0 & -h^I_{l+5c} & h^R_{l+5c} & 0 \\
0 & h^R_{l+5c} & h^I_{l+5c} & 0 \\
h^R_{l+6c} & 0 & 0 & -h^I_{l+6c} \\
h^I_{l+6c} & 0 & 0 & h^R_{l+6c} \\
0 & -h^I_{l+7c} & h^R_{l+7c} & 0 \\
0 & h^R_{l+7c} & h^I_{l+7c} & 0
\end{bmatrix}
\times
\begin{bmatrix} x^R_l \\ x^I_l \\ x^R_{l+c} \\ x^I_{l+c} \end{bmatrix}
+
\begin{bmatrix} w^R_l \\ w^I_l \\ w^R_{l+c} \\ w^I_{l+c} \\ w^R_{l+2c} \\ w^I_{l+2c} \\ w^R_{l+3c} \\ w^I_{l+3c} \\ w^R_{l+4c} \\ w^I_{l+4c} \\ w^R_{l+5c} \\ w^I_{l+5c} \\ w^R_{l+6c} \\ w^I_{l+6c} \\ w^R_{l+7c} \\ w^I_{l+7c} \end{bmatrix}
$$

$$\bar{r}_l = \bar{H}_l \bar{x}_l + \bar{w}_l = \left[\bar{H}_{l,1} \, \bar{H}_{l,2}\right]\bar{x}_l + \bar{w}_l$$

Single-symbol ML decoding can be used due to orthogonality of the columns of $\bar{H}_l$. Therefore, the ML receiver determines the $l^{th}$ and $(l+c)^{th}$ data symbols by using the following rules, respectively:

$$[\hat{x}_l] = \underset{x_l \in S^\varphi}{argmin} \left\| \bar{r}_l - \bar{H}_{l,1}\left[x^R_l \; x^I_l\right]^T \right\|^2,$$

$$[\hat{x}_{l+c}] = \underset{x_{l+c} \in S^\varphi}{argmin} \left\| \bar{r}_l - \bar{H}_{l,2}\left[x^R_{l+c} \; x^I_{l+c}\right]^T \right\|^2,$$

where $l$ = 1, ..., $c$. Here, a total number of metric calculations is reduced from $M^2$ to $2M$ to decode a pair of symbols. Note that this decoding scheme can be also exploited for DCM and MCS without DCM.

Fig. 10b illustrates an exemplary receive, compatible with the transmitter described above with reference to Fig. 3a. A signal is received via an antenna and transformed from analog to digital domain by an analog to digital conversion module 1065. Then, the digital symbols are parallelized in a serial to parallel conversion module 1055. Cyclic prefix is removed in a CP module 1045. Then, the transformation is performed in module 1035. In this example, corresponding to Fig. 3a, the transformation is the FFT. After the FFT, the demodulation 1025 is performed. The demodulation may include de-mapping from the subcarriers and some detection algorithm, as is described in more detail below. The demodulation may be any of the below described embodiments and exemplary implementations. After the demodulation 1025, a parallel to serial module 1015 serializes the demodulate bits into a data block, which may be further processed. For example, forward error correction decoding, error detection or the like may be performed.

*Power Pattern Index Modulation*

Alternatively or accompanying application of CI to DCM or DCM/DUP, power pattern index modulation (PPIM) can be applied. The power pattern index modulation can help to increase the number of transmitted bits without increasing the modulation order.

Such power pattern index modulation is illustrated in Fig. 6. In particular, Fig. 6 shows exemplary subcarriers with indexes a, *b, a+2c, b+2c, a+4c, b+4c, a+6c, b+6c,* onto which symbol $x_a$, and, in particular its real part $x_a^R$ and its imaginary part $x_a^I$, is mapped. In this example, a indicates a subcarrier of a real part of a complex symbol into which a power level is encoded and b indicates a subcarrier of an imaginary part of a complex symbol into which a power level is encoded. In other words, the power level pattern is not (necessarily) mapped onto real or imaginary components of the neighboring subcarriers. Rather, as the DCM/DUP may distribute the replicas of the symbol in frequency domain, the power levels are encoded into such distributed subcarriers. As mentioned above, such distribution may be performed by interleaving, so that b is determined as a function of a (or vice versa, in general).

The subcarriers are determined as shown above, in compliance with a CI-DUP-DCM. Thus, even though Fig. 6 shows the subcarriers as consecutive, as can be seen from the subcarriers indexes, they are in fact not adjacent. According to this exemplary implementation, the power pattern has the length which equals to twice (for real and imaginary portion) the number of complex symbols which are "repeated", i.e. 4 for DCM and 8 for the DCM/DUP. However, this embodiments is only exemplary, and not limited to DCM and or DCM+DUP. It is possible to map complex symbols generally into a plurality of subcarriers, the plurality may be 3, 5, 6, 7, 8, or higher. Then the pattern may have the same length as twice such number of complex symbols. Such combination of DCM, DCM+DUP (denoted herein also as DCM/DUP) or other kind of multiple symbol transmission with power pattern based data transmission.

It is noted that, in general, the pattern length does not have to be the same as twice the number of the complex symbols. It is conceivable that it is shorter or longer. The association between the subcarriers and the power pattern (how the power pattern is mapped onto subcarriers) may be pre-configured and known to the receiver and transmitter beforehand, e.g. by standard or by a preceding signaling.

In this example, two power levels are defined, namely a high level ($P_1$) and a low level ($P_2$). As can be seen from the illustration on the bottom of the subcarrier row in Fig. 6, in this example $P_1 > P_2$. In this example, the complex symbol is repeated four times and has two parts (real and imaginary). Accordingly, there are eight imaginary or real parts with configurable power level. According to the exemplary PPIM, shown in Fig. 6, one bit carrying data is mapped onto one power pattern. In particular, value zero (0) of the data bit ("Bit 0") is encoded into a first power pattern $P_1, P_2, P_2, P_1, P_1, P_2, P_2, P_1$ and value one (1) of the data bit ("Bit 1") is encoded into a second power pattern $P_2, P_2, P_2, P_2, P_2, P_1, P_1, P_2$. In this example, the first power pattern and the second power pattern are complementary, which may provide an advantage of a high (Hamming) distance and thus, improved error rate. However, the present disclosure is not limited to such complementary patterns, and in general, the pattern used do not have to be complementary. Moreover, in the present example, there are two power patterns used, which have the length of 8 bits. However, the present disclosure is not limited to such patterns. There may be more than two patterns and the patterns may be longer or shorter.

In more detail, to implement PPIM on the top of DCM/DUP, the ath data symbol vector $\breve{x}_a = [x_a^R, x_a^I, x_a^R, x_a^I, x_a^R, x_a^I, x_a^R, x_a^I]^T$ is multiplied with the square root of the determined power pattern $p$ and new data vector is obtained as $\acute{x}_a = \breve{x}_a \sqrt{p}$. If incoming bit is 0, then $p = [P_1, P_2, P_2, P_1, P_1, P_2, P_2, P_1]^T$ and if incoming bit is 1, then $p = [P_2, P_1, P_1, P_2, P_2, P_1, P_1, P_2]^T$. This method may increase (in some scenarios double) the data rate of CI-

DCM-MCSO and CI-DUP-DCM-MCS0.

In the present example, a total number of $2^4$ and $2^8$ different power patterns can be created for CI-DCM and CI-DUP-DCM, respectively, since *ath* data symbol ($x_a$) is repeated over 4 and 8 separated subcarriers. Only two power patterns can be employed in order to obtain diversity order of 4 and 8 for CI-DCM and CI-DUP-DCM, respectively. Therefore, according to one additional bit, one power pattern is determined out of two patterns for $x_a$ as seen in Fig. 6.

The PPIM as well as DCM and DCM/DUP can also be used as a downlink non-orthogonal multiple access (DL-NOMA) scheme. In this scheme, information is transmitted by the data symbols with CI-DCM or CI-DUP-DCM and by the indices of power patterns for user 1 and 2, respectively. Note that the length of power patterns does not have be 4 or 8 in this NOMA scheme. It can be adjusted according to the need of the user 2, or in general, allocated to different users according to their channel quality, priority, amount of data to be transmitted, or the like. If length is increased, then data rate decreases and reliability improves. On the other hand, if length is decreased, the data rate increases and reliability gets worse. In such application, the different users can decode data independently.

The PPIM example above is only exemplary. In general, the underlying approach is encoding data into power levels of the real parts and/or imaginary parts of a data symbol which is repeated a plurality of times (e.g. twice for DCM and four times for DCM/DUP, but not limited to these numbers). The data encoding according to the PPIM may then generally comprise representing two bit values with two respective power level sequences, encoding bits of the data into the power level sequences, and mapping the power level sequences of the encoded data onto powers of the real parts and/or the imaginary parts.

In some embodiments, each of the two power level sequences is a sequence of two or more power levels out of a set of predefined power levels, and the set of predefined power levels includes at least two different power levels. In the above example, there are only two power levels. However, it is possible to increase further the data rate by employing more power levels.

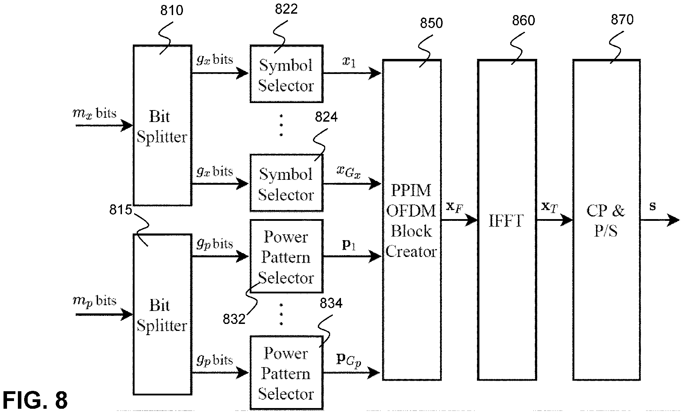

Fig. 8 shows a block diagram illustrating an exemplary transmitter implementation. In particular, m_x is the number of bits transmitted by the data symbols (e.g. by DCM, DCM/DUP, DCM-CI, DCM/DUP-CI, or the like) and m_p is the number of bits transmitted by the indices of power patterns. In this exemplary embodiment, m_x = G_x*log2(M), wherein M is a number of modulation constellation points (corresponding to modulation order). For example, M=2 for BPSK, M=4 for QPSK and so on. Moreover, G_x is the number of data symbols to be mapped onto the subcarriers. For example, G_x = N_SD for MCS, N_SD/2 for DCM and DCM with CI, N_SD/4 for DUP mode DCM and DUP mode DCM with CI. In Fig. 5, G_x = N_SD/4. The number of bits transmitted by one data symbol is g_x = log2(M).

In other words, the bit splitter 810 provides to each symbol selector g_x bits to perform the modulation (such as BPSK or QPSK or the like). The gx bits may be the same, i.e. the splitter may actually provide the same portion of g_x bits into each branch. In each branch, a symbol selector 822, 824 (in general G_x symbol selectors) generates the modulation symbols x_1, ..., x_{G_x}. These modulation symbols are then mapped onto the subcarriers as discussed above, e.g. based on MCS, DCM, DCM/DUP, DCM-CI, or DCM/DUP-CI or the like.

Moreover, G_p is the number of all selected power patterns. Here, m_P = G_p*log2(P), with P being the number of all possible power patterns (possible here refers to power patterns used in the PPIM to encode bits or symbols). In Fig. 6, the power patterns are [P1,P2,P2,P1, P1,P2,P2,P1] and [P2,P1,P1,P2,P2,P1,P1,P2]. This means that P=2. There are only two power patterns. As mentioned above, g_p is the number of bits transmitted by the indices of one selected power pattern and g_p = log2(P). In Fig. 6, g_p = 1 bit. In Fig. 6, G_p = N_SD/4, since a power pattern with length 8 is selected for each data symbol and each data symbol is repeated over 8 subcarriers. For example, there is a total number of N_SD/4 data symbols for DUP mode DCM with CI. The length of the power pattern does not have to be 8 as already mentioned above. For instance, two power patterns with length 4 may be selected for each data symbol. Hence, more bits can be transmitted. Finally, total number of transmitted bits by the indices of power patterns = m_p = G_p*log2(P).p_1 and p_{G_p} are the selected power patterns according to the incoming bits. The power patterns are selected by the respective power pattern selectors 832 and 834.

It is noted that in the above mentioned examples, data was coded into imaginary as well as real parts of the modulation symbols. However, the present disclosure is not limited thereto and, in general, data may be coded only into one of the components (e.g. leaving the other component with a default value which may be used for channel estimation). Alternatively, both imaginary and real portion may be coded with the same power given by the data to be coded. This approach may be more robust, but possibly results in lower data rate.

In the PPIM OFDM block creator 850, the modulation symbols are mapped onto the subcarriers as described above, e.g. with the DCM and CI or DCM+DUP and CI or in general according to the symbols x and indices of the power patterns p provided. Then, in the IFFT block 860, an OFDM symbol is generated by inverse transforming the subcarriers. After adding a cyclic prefix, the OFDM symbols are further provided to the front end of the transmitter and transmitted.

Regarding advantages, application of CI together with DCM/DUP as described above may be capable of distributing each data symbol to more resources than DUP mode DCM or DCM alone. As it exploits more subcarriers to convey the same information compared to DUP mode DCM, it provides better reliability. Although the above-described CI-DCM/DUP provides higher reliability than DUP mode DCM, its decoding complexity remains the same. Additional application of the PPIM may further increase the data rate. Such index modulation (IM) employs the indices of subcarrier power patterns to transmit additional bits. Additional robustness and diversity may be achieved by not exploiting all possible power patterns (e.g. $2^8$ as in the example of Fig. 6) but rather selecting only a relatively small subset (e.g. 2 as in the example of Fig. 2). Increasing the diversity order of these schemes may further lead to the extension of the communication range, which may be desirable especially for the LPI channel. A combination of OFDM and space-time block codes with the coordinate interleaving DCM/DUP or DCM can be effective also due to its compatibility with Wi-Fi technology.

In correspondence with the above described transmitting device and receiving device, communication methods for wireless transmission(s) to be performed by a transmitting device and a receiving device is provided. As illustrated in Fig. 3a, the transmitting method for wireless transmission of a data block comprises obtaining 910 the data block to be coded. Such data block is for instance a block of bits representing the encoded data, such as FEC-encoded data. Such data may be further represented as modulation symbols of a modulation with order 2 (such as BPSK) or 4 (such as QPSK) or higher (e.g. nPSK modulations or nQAM modulations). In general, modulation symbols are complex symbols.

The method may further include mapping 920 each complex symbol of a sequence of complex symbols onto a respective subcarrier, wherein the sequence is a sequence concatenated from N sequences of complex symbols, N is an integer greater than one, and each of the N sequences is a mapping of the data block onto the complex symbols of the respective sequence. This corresponds to DCM or DCM/DUP or generally to a modulation which repeats, over frequency, each symbol multiple times. Moreover, the real parts of the sequence have been circularly shifted 930 by a first number, $c_{Re}$, of elements. The imaginary parts of the sequence have been circularly shifted 930 by a second number, $c_{Im}$, of elements. Herein, $c_{Re}$ and $c_{Im}$ are different integers greater than or equal to zero. The mutual shift between the imaginary and real components corresponds to CI. The amount of shift in either imaginary or real parts may be zero, i.e. only one component (imaginary, real) of the sequence is cyclically shifted. It is noted that the cyclically shifted sequence may be the sequence combining the multiple (N) versions of the smaller sequences, or may be applies to the smaller sequences.

Optionally, a PPIM 940 may be applied to encode additional bit using a power pattern, as explained above. Finally, a signal is transmitted 950 representing such DCM/DUP-CI mapped data. The transmission here may include various different steps. For example, after the mapping onto the subcarriers, an IFFT may be employed to generate frequency division multiplex symbols (such as OFDM symbols or symbols generated in a non-orthogonal frequency division scheme, or the like. Any system which maps modulation symbols onto different subcarriers may be applied. PAPR reducing techniques may be applied, cyclic prefix (CP) may be include between the symbols, beamforming or space-time block coding or other form or spatial diversity may be added by any of the known techniques. Moreover, the waveforming and amplification may be applied. These steps are only exemplary, there may be additional steps and not all the above mentioned steps must be applied (such as PAPR reduction), as is clear to those skilled in the art.

In correspondence with the above described receiving device, a communication method for wireless reception to be performed by a receiving device is provided. As illustrated in Fig. 3b, the method comprises determining the data block from a sequence of complex symbols.

For instance, a signal is received 960. Then the demapping 970 and detection may be performed. The determining of the data block may include a maximum likelihood detection. Each complex symbol of the sequence has been received on a respective subcarrier. The sequence is a sequence concatenated from N sequences of complex symbols, wherein N is an integer greater than one, and each of the N sequences is a mapping of the data block onto the complex symbols of the respective sequence. The real parts of the sequence have been circularly shifted by a first number, $c_{Re}$, of elements. The imaginary parts of the sequence have been circularly shifted by a second number, $c_{Im}$, of elements, wherein $c_{Re}$ and $c_{Im}$ are different integers greater than or equal to zero. In this way, the decoded data block may be obtained.

At the receiver side an exhaustive search may be performed to find the best matching pattern. In case of only two patterns, the search may include comparison of the received pattern with each of the two possible pattern (to code a bit with respective value 1 or 0) and deciding that the pattern more similar to the received pattern was transmitted. The similarity may be determined in any known metric.

*Implementation in the WiFi framework*

Embodiments of the present disclosure may be particularly suitable for Wi-Fi standards. For example, as mentioned above, in IEEE 802.11 ax DCM could be part of some modulation and coding schemes (MCS0). In future standards, *such* as 802.11 be there may be further MCSs which support DCM and/or DUP. Application of DCM and/or DUP, and especially the above described DCM/DUP with CI (and possibly PPIM) may be provide as additional MCSs, wherein it may be advantageous to apply these robust techniques for the lower MCSs (MCSs for lower SNRs), as they may increase diversity and lower the error rate. Accordingly, it may be desirable to apply lower-order modulation(s) to the symbols mapped according to the DCM or DCM/DUP with CI in such additional MCS or MCSs. For example, a binary phase shift keying (BPSK) may be applied (possibly with rotation) in some embodiments. In some implementations, QPSK may be applied. Coding applied with these modulations may have e.g. a code rate of ½ or the like. However, as mentioned the present disclosure is not limited to the WiFi framework and in general also applicable with higher level modulations and other code rates.

In context of WiFi, DUP may be applied, e.g. to 40, 80, or 160 symbols (e.g. DCM symbols) so that 80, 160, or 320 RUs are used. However, these are mere examples. In order to increase diversity, CI and/or PPIM as described above may be advantageously applied. Following the subcarrier mapping, some PAPR reduction scheme may be applied.

*Implementations in software and hardware*

The methodologies described herein (at the transmitter side and the received side) may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium such as the memory 310 or any other type of storage. The computer-readable media includes physical computer storage media, which may be any available medium that can be accessed by the computer, or, in general by the processing circuitry 320. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein. In particular, the above embodiments and exemplary implementations are multiple-input multiple-output (MIMO) compatible and can be applied to all MCSs.

*Selected embodiments and examples*

According to an aspect, a method is provided for wireless transmission of a data block, the method comprising the steps of: mapping each complex symbol of a sequence of complex symbols onto a respective subcarrier, wherein: the sequence is a sequence concatenated from N sequences of complex symbols, N is an integer greater than one, and each of the N sequences is a mapping of the data block onto the complex symbols of the respective sequence; and (i) the real parts of the sequence have been circularly shifted by a first number, $c_{Re}$, of elements, and/or (ii) the imaginary parts of the sequence have been circularly shifted by a second number, $c_{Im}$, of elements, wherein $c_{Re}$ and $c_{Im}$ are different integers greater than or equal to zero. The method may further comprise transmitting the mapped symbols.

For example, the number, N, of the N sequences is two or four. In some embodiments, two or more of the N sequences are mutually different, which may provide for a higher data rate. In an alternative embodiment, all N sequences are identical, which may provide for a higher diversity and possibly a lower error rate.

According to an embodiment, a second half of the sequence is a repetition of the first half of the sequence. In some exemplary implementations, an absolute value of a difference between the first and the second number is

$$|c_{Re} - c_{Im}| = \frac{N_{SD}}{2N},$$ wherein $N_{SD}$ is a number of the subcarriers.

For example, either $c_{Re}$ or $c_{Im}$ is equal to zero.

The method may further comprise encoding data into power levels of said real parts and/or said imaginary parts.

In an exemplary implementation, the encoding of data comprises: representing two bit values with two respective power level sequences; encoding bits of the data into the power level sequences; and mapping the power level sequences of the encoded data onto powers of said real parts and/or said imaginary parts.

For example, each of the two power level sequences is a sequence of two or more power levels out of a set of predefined power levels; and the set of predefined power levels includes at least two different power levels.

In some exemplary implementations, the wireless transmission of the data block is a non-orthogonal multiple access, NOMA. In some exemplary implementations, the wireless transmission of the data block is OFDM.

According to an aspect, a method is provided for wireless reception of a data block, the method comprising the steps of: determining the data block from a sequence of complex symbols, wherein each complex symbol of the sequence has been received on a respective subcarrier, the sequence is a sequence concatenated from N sequences of complex symbols, wherein N is an integer greater than one, and each of the N sequences is a mapping of the data block onto the complex symbols of the respective sequence; and (i) the real parts of the sequence have been circularly shifted by a first number, $c_{Re}$, of elements, and/or (ii) the imaginary parts of the sequence have been circularly shifted by a second number, $c_{Im}$, of elements, wherein $c_{Re}$ and $c_{Im}$ are different integers greater than or equal to zero. The method may further include receiving a signal including the sequence of complex symbols.

For example, the determining of the data block includes determining values of data symbols of the data block by performing a maximum likelihood detection.

In particular, the determining of the data block includes, for each of one or more data symbols of the data block, determining the value of the data symbol by performing an individual maximum likelihood detection, in which only different values of said data symbol are considered.

The above described modulation details also apply to the receiving method, as the receiving method processes the signal as transmitter by the transmitter.

According to an aspect, an apparatus is provided for wireless transmission of a data block, comprising: circuitry configured to map each complex symbol of a sequence of complex symbols onto a respective subcarrier, wherein the sequence is a sequence concatenated from N sequences of complex symbols, wherein N is an integer greater than one, and each of the N sequences is a mapping of the data block onto the complex symbols of the respective sequence; and the real parts of the sequence have been circularly shifted by a first number, $c_{Re}$, of elements, and/or the imaginary parts of the sequence have been circularly shifted by a second number, $c_{Im}$, of elements, wherein $c_{Re}$ and $c_{Im}$ are different integers greater than or equal to zero, and a transceiver configured to transmit the mapped complex symbols.

According to an aspect, an apparatus for wireless reception of a data block, comprising: a transceiver configured to receive signal including a sequence of complex symbols; and circuitry configured to determine the data block from the sequence of complex symbols, wherein each complex symbol of the sequence has been received on a respective subcarrier, the sequence is a sequence concatenated from N sequences of complex symbols, wherein N is an integer greater than one, and each of the N sequences is a mapping of the data block onto the complex symbols of the respective sequence; and the real parts of the sequence have been circularly shifted by a first number, $c_{Re}$, of elements, and/or the imaginary parts of the sequence have been circularly shifted by a second number, $c_{Im}$, of elements, wherein $c_{Re}$ and $c_{Im}$ are different integers greater than or equal to zero.

The examples and exemplary implementations described above for the methods apply in the same manner to the apparatuses. in particular, the processing circuitry may be further configured to perform the steps of one or more of the above-described embodiments and exemplary implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

**Claims**

1. A method for wireless transmission of a data block, the method comprising the steps of:

    mapping each complex symbol of a sequence of complex symbols onto a respective subcarrier, wherein:

        the sequence is a sequence concatenated from N sequences of complex symbols, N is an integer greater than one, and each of the N sequences is a mapping of the data block onto the complex symbols of the respective sequence; and

        - the real parts of the sequence have been circularly shifted by a first number, $c_{Re}$, of elements, and/or
        - the imaginary parts of the sequence have been circularly shifted by a second number, $c_{Im}$, of elements,

wherein

$c_{Re}$ and $c_{Im}$ are different integers greater than or equal to zero.

**2.** The method according to claim 1, wherein
the number, N, of the N sequences is two or four.

**3.** The method according to claim 1 or 2, wherein
two or more of the N sequences are mutually different.

**4.** The method according to claim 1 or 2, wherein
all N sequences are identical.

**5.** The method according to any of claims 1 to 4, wherein
a second half of the sequence is a repetition of the first half of the sequence.

**6.** The method according to any of claims 1 to 5, wherein

an absolute value of a difference between the first and the second number is $|c_{Re} - c_{Im}| = \dfrac{N_{SD}}{2N}$, wherein $N_{SD}$ is a number of the subcarriers.

**7.** The method according to any of claims 1 to 6, wherein
either $c_{Re}$ or $c_{Im}$ is equal to zero.

**8.** The method according to any of claims 1 to 7, further comprising:
encoding data into power levels of said real parts and/or said imaginary parts.

**9.** The method according to claim 8, wherein the encoding of data comprises:

representing two bit values with two respective power level sequences;
encoding bits of the data into the power level sequences;
map the power level sequences of the encoded data onto powers of said real parts and/or said imaginary parts.

**10.** The method according to claim 8 or 9, wherein
each of the two power level sequences is a sequence of two or more power levels out of a set of predefined power levels; and
the set of predefined power levels includes at least two different power levels.

**11.** The method according to any of claims 1 to 10, wherein the wireless transmission of the data block is a non-orthogonal multiple access, NOMA.

**12.** A method for wireless reception of a data block, the method comprising the steps of:

determining the data block from a sequence of complex symbols, wherein
each complex symbol of the sequence has been received on a respective subcarrier,
the sequence is a sequence concatenated from N sequences of complex symbols, wherein N is an integer greater than one, and each of the N sequences is a mapping of the data block onto the complex symbols of the respective sequence; and

- the real parts of the sequence have been circularly shifted by a first number, $c_{Re}$, of elements, and/or
- the imaginary parts of the sequence have been circularly shifted by a second number, $c_{Im}$, of elements, wherein

$c_{Re}$ and $c_{Im}$ are different integers greater than or equal to zero.

**13.** The method according to claim 12, wherein
the determining of the data block includes, for each of one or more data symbols of the data block, determining the value of the data symbol by performing an individual maximum likelihood detection, in which only different values of said data symbol are considered.

14. An apparatus for wireless transmission of a data block, comprising:

  circuitry configured to map each complex symbol of a sequence of complex symbols onto a respective subcarrier, wherein the sequence is a sequence concatenated from N sequences of complex symbols, wherein N is an integer greater than one, and each of the N sequences is a mapping of the data block onto the complex symbols of the respective sequence; and

  - the real parts of the sequence have been circularly shifted by a first number, $c_{Re}$, of elements, and/or
  - the imaginary parts of the sequence have been circularly shifted by a second number, $c_{Im}$, of elements, wherein

  $c_{Re}$ and $c_{Im}$ are different integers greater than or equal to zero, and
  a transceiver configured to transmit the mapped complex symbols.

15. An apparatus for wireless reception of a data block, comprising:

  a transceiver configured to receive signal including a sequence of complex symbols; and
  circuitry configured to determine the data block from the sequence of complex symbols, wherein
  each complex symbol of the sequence has been received on a respective subcarrier,
  the sequence is a sequence concatenated from N sequences of complex symbols, wherein N is an integer greater than one, and each of the N sequences is a mapping of the data block onto the complex symbols of the respective sequence; and

  - the real parts of the sequence have been circularly shifted by a first number, $c_{Re}$, of elements, and/or
  - the imaginary parts of the sequence have been circularly shifted by a second number, $c_{Im}$, of elements, wherein

  $c_{Re}$ and $c_{Im}$ are different integers greater than or equal to zero.

CS

**FIG. 1**

**FIG. 2**

301

| Memory 310 | ←→ | Wireless transceiver 330 |
| Processing circuitry 320 | ←→ | User interface 340 |

350

**FIG. 3a**

306

| Memory 315 | ←→ | Wireless transceiver 335 |
| Processing circuitry 325 | ←→ | User interface 345 |

355

**FIG. 3b**

$\boxed{x_l^R}$ : The real part of the $l^{th}$ data symbol

$\boxed{x_l^I}$ : The imaginary part of the $l^{th}$ data symbol

| 1 | 2 | ... | 245 | 246 | ... | 490 | 491 | 492 | ... | 735 | 736 | ... | 980 | 981 | 982 | ... | 1225 | 1226 | ... | 1470 | 1471 | 1472 | ... | 1715 | 1716 | ... | 1960 |
|---|---|---|---|---|---|---|---|---|---|---|---|---|---|---|---|---|---|---|---|---|---|---|---|---|---|---|
| $x_1^R$ | $x_2^R$ | ... | $x_{245}^R$ | $x_{246}^R$ | ... | $x_{490}^R$ | $x_1^R$ | $x_2^R$ | ... | $x_{245}^R$ | $x_{246}^R$ | ... | $x_{490}^R$ | $x_1^R$ | $x_2^R$ | ... | $x_{245}^R$ | $x_{246}^R$ | ... | $x_{490}^R$ | $x_1^R$ | $x_2^R$ | ... | $x_{245}^R$ | $x_{246}^R$ | ... | $x_{490}^R$ |
| $x_1^I$ | $x_2^I$ | ... | $x_{245}^I$ | $x_{246}^I$ | ... | $x_{490}^I$ | $x_1^I$ | $x_2^I$ | ... | $x_{245}^I$ | $x_{246}^I$ | ... | $x_{490}^I$ | $x_1^I$ | $x_2^I$ | ... | $x_{245}^I$ | $x_{246}^I$ | ... | $x_{490}^I$ | $x_1^I$ | $x_2^I$ | ... | $x_{245}^I$ | $x_{246}^I$ | ... | $x_{490}^I$ |

# FIG. 4

$\boxed{x_l^R}$ : The real part of the $l^{th}$ data symbol

$\boxed{x_l^I}$ : The imaginary part of the $l^{th}$ data symbol

| 1 | 2 | ⋯ | 245 | 246 | ⋯ | 490 | 491 | 492 | ⋯ | 735 | 736 | ⋯ | 980 | 981 | 982 | ⋯ | 1225 | 1226 | ⋯ | 1470 | 1471 | 1472 | ⋯ | 1715 | 1716 | ⋯ | 1960 |
|---|---|---|---|---|---|---|---|---|---|---|---|---|---|---|---|---|---|---|---|---|---|---|---|---|---|---|---|
| $x_1^R$ | $x_2^R$ | ⋯ | $x_{245}^R$ | $x_{246}^R$ | ⋯ | $x_{490}^R$ | $x_1^R$ | $x_2^R$ | ⋯ | $x_{245}^R$ | $x_{246}^R$ | ⋯ | $x_{490}^R$ | $x_1^R$ | $x_2^R$ | ⋯ | $x_{245}^R$ | $x_{246}^R$ | ⋯ | $x_{490}^R$ | $x_1^R$ | $x_2^R$ | ⋯ | $x_{245}^R$ | $x_{246}^R$ | ⋯ | $x_{490}^R$ |
| $x_{246}^I$ | $x_{247}^I$ | ⋯ | $x_{490}^I$ | $x_1^I$ | ⋯ | $x_{245}^I$ | $x_{246}^I$ | $x_{247}^I$ | ⋯ | $x_{490}^I$ | $x_1^I$ | ⋯ | $x_{245}^I$ | $x_{246}^I$ | $x_{247}^I$ | ⋯ | $x_{490}^I$ | $x_1^I$ | ⋯ | $x_{245}^I$ | $x_{246}^I$ | $x_{247}^I$ | ⋯ | $x_{490}^I$ | $x_1^I$ | ⋯ | $x_{245}^I$ |

# FIG. 5

| $a$ | $b$ | $a+2c$ | $b+2c$ | $a+4c$ | $b+4c$ | $a+6c$ | $b+6c$ |
|---|---|---|---|---|---|---|---|
| $x_a^R$ | $x_a^I$ | $x_a^R$ | $x_a^I$ | $x_a^R$ | $x_a^I$ | $x_a^R$ | $x_a^I$ |

Bit 0:

Bit 1:

## FIG. 6

## FIG. 7

FIG. 8

910: Obtain data block

↓

920: Perform DCM/DUP

↓

930: Perform CI

↓

940: Perform PPIM

↓

950: Transmit signal

**FIG. 9a**

960: Receive signal

↓

970: Perform demultiplexing and ML detection

↓

980: Obtain data block

**FIG. 9b**

1010       1020       1030       1040       1050       1060

Bits → | Serial to Parallel | ⋮ → | Modulator | ⋮ → | Inverse Fast Fourier Transform | ⋮ → | Adding Cyclic Prefix | ⋮ → | Parallel to Serial | → | Digital to Analog | → ▽

**FIG. 10a**

1065       1055       1045       1035       1025       1015

▽ → | Analog to Digital | → | Serial to Parallel | ⋮ → | Removing Cyclic Prefix | ⋮ → | Fast Fourier Transform | ⋮ → | Demodulator | ⋮ → | Parallel to Serial | → Bits

**FIG. 10b**

**EUROPEAN SEARCH REPORT**

Europäisches
Patentamt
European
Patent Office
Office européen
des brevets

Application Number

EP 21 16 0348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/172985 A1 (IDAC HOLDINGS INC [US]) 5 October 2017 (2017-10-05) * figures 10, 11 * * paragraph [0217] - paragraph [0228] * ----- | 1-7, 11-15 | INV. H04L27/26 H04B7/12 H04W52/34 |
| A | HYUN-SEOK RYU ET AL: "BER analysis of dual-carrier modulation (DCM) over Rayleigh fading channel", ULTRA MODERN TELECOMMUNICATIONS AND CONTROL SYSTEMS AND WORKSHOPS (ICUMT), 2010 INTERNATIONAL CONGRESS ON, IEEE, PISCATAWAY, NJ, USA, 18 October 2010 (2010-10-18), pages 717-721, XP031841029, DOI: 10.1109/ICUMT.2010.5676558 ISBN: 978-1-4244-7285-7 * Section II. * ----- | 1-15 | |
| A | ALI TUGBERK DOGUKAN (VESTEL ET AL: "Dual-Carrier Index Modulation", IEEE DRAFT; 11-20-1700-03-00BE-DUAL-CARRIER-INDEX-MODULATION, IEEE-SA MENTOR, PISCATAWAY, NJ USA , vol. 802.11 EHT; 802.11be, no. 3 2 November 2020 (2020-11-02), pages 1-10, XP068174844, Retrieved from the Internet: URL:https://mentor.ieee.org/802.11/dcn/20/11-20-1700-03-00be-dual-carrier-index-modulation.pptx [retrieved on 2020-11-02] * pages 3, 4 * ----- -/-- | 1-15 | TECHNICAL FIELDS SEARCHED (IPC) H04L H04W H04B |

The present search report has been drawn up for all claims

| Place of search | Date of completion of the search | Examiner |
|---|---|---|
| Berlin | 12 August 2021 | Chave, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 16 0348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | ALI TUGBERK DOGUKAN (VESTEL): "Diversity Enhancement for DUP mode", IEEE DRAFT; 11-21-0368-01-00BE-DIVERSITY-ENHANCEMENT-FOR-DUP-MODE, IEEE-SA MENTOR, PISCATAWAY, NJ USA , vol. 802.11 EHT; 802.11be, no. 1 8 March 2021 (2021-03-08), pages 1-9, XP068179006, Retrieved from the Internet: URL:https://mentor.ieee.org/802.11/dcn/21/11-21-0368-01-00be-diversity-enhancement-for-dup-mode.pptx [retrieved on 2021-03-08] * page 3 - page 6 * ----- | 1-15 | |

TECHNICAL FIELDS
SEARCHED       (IPC)

The present search report has been drawn up for all claims

| Place of search | Date of completion of the search | Examiner |
|---|---|---|
| Berlin | 12 August 2021 | Chave, Julien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

**ANNEX TO THE EUROPEAN SEARCH REPORT
ON EUROPEAN PATENT APPLICATION NO.**

EP 21 16 0348

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2021

| Patent document cited in search report | Publication date | Patent family member(s) | Publication date |
|---|---|---|---|
| WO 2017172985 A1 | 05-10-2017 | EP 3437206 A1<br>EP 3667945 A1<br>TW 201803311 A<br>US 2020259607 A1<br>WO 2017172985 A1 | 06-02-2019<br>17-06-2020<br>16-01-2018<br>13-08-2020<br>05-10-2017 |

EPO FORM P0459

For more details about this annex : see Official Journal of the European Patent Office, No. 12/82